(19) Europäisches Patentamt
European Patent Office
Office européen des brevets

(11) **EP 2 528 251 A1**

(12) **EUROPEAN PATENT APPLICATION**
published in accordance with Art. 153(4) EPC

(43) Date of publication:
**28.11.2012 Bulletin 2012/48**

(21) Application number: **10843054.7**

(22) Date of filing: **18.01.2010**

(51) Int Cl.:
*H04B 10/02* (2006.01)          *H04B 10/04* (2006.01)
*H04B 10/06* (2006.01)          *H04B 10/14* (2006.01)
*H04B 10/142* (2006.01)         *H04B 10/152* (2006.01)
*H04B 10/18* (2006.01)          *H04B 10/26* (2006.01)
*H04B 10/28* (2006.01)          *H04J 14/00* (2006.01)
*H04J 14/02* (2006.01)

(86) International application number:
**PCT/JP2010/050474**

(87) International publication number:
**WO 2011/086696 (21.07.2011 Gazette 2011/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Hitachi, Ltd.**
**Chiyoda-ku**
**Tokyo 100-8280 (JP)**

(72) Inventor: **SASAKI, Shinya**
**Chiyoda-ku**
**Tokyo 100-8220 (JP)**

(74) Representative: **MERH-IP**
**Matias Erny Reichl Hoffmann**
**Paul-Heyse-Strasse 29**
**80336 München (DE)**

(54) **OPTICAL COMMUNICATION SYSTEM, OPTICAL TRANSMITTER, OPTICAL RECEIVER AND OPTICAL TRANSPONDER**

(57)     In an optical OFDM communication system, the PAPR is reduced. A sinusoidal wave output from an RF oscillator provided in a transmitter is phase-modulated using a baseband OFDM signal output from a transmitter-signal processing unit 100, and this phase-modulated sinusoidal wave is used to modulate an optical wave. Using this light as signal light to achieve optical communication enables a low PAPR value such as 6 dB or less to be achieved where the photoelectric power is high in an optical fiber, thus enabling the above described problems to be solved. This signal light travels through an optical fiber serving as the transmission line and is converted by a receiver into an electric signal. The electric signal is synchronously detected using a sinusoidal wave output from an RF oscillator oscillating at the same frequency as the above RF oscillator provided in the transmitter. Ordinary OFDM signal processing for reception is performed on the output of the synchronous detection to recover data.

FIG. 1

**Description**

Technical Field

The present invention relates to an optical communication system, an optical transmitter, an optical receiver, and an optical transponder, and more particularly to an optical OFDM communication system and a multicarrier optical communication system. More specifically, the invention relates to an optical communication system, an optical transmitter, an optical receiver, and an optical transponder that reduce the PAPR (Peak-to-Average Power Ratio) in an optical OFDM (Orthogonal Frequency Division Multiplexing) communication system.

Background Art

Optical communication systems put into practical use so far use binary modulation and demodulation technologies based on optical intensity. More specifically, the transmitting side converts digital information, i.e., "ONEs" and "ZEROs", into ONs and OFFs in optical intensity and transmits them into an optical fiber, and the receiving side receives the light propagated through the optical fiber and recovers the original information by performing opto-electric conversion. In recent years, with the rapid expansion of the use of Internet, further increases in communication capacity of optical communication systems are increasingly required. In order to accommodate such a need for further increases in communication capacity, the rate at which light is turned on and off, i.e., the modulation speed, has been increased in the past. However, such an approach in which an increase in communication capacity is achieved by an increase in modulation speed typically has the following problems.
That is, increasing the modulation speed may cause a problem in that the achievable transmission distance, which is limited by the wavelength dispersion of the optical fiber, is reduced. In general, the achievable transmission distance limited by the wavelength dispersion is inversely proportional to the square of the bit rate. Therefore, doubling the bit rate may result in the achievable transmission distance limited by the wavelength dispersion being reduced by a factor of four. In addition, increasing the modulation speed may cause another problem in that the achievable transmission distance limited by the polarization mode dispersion of the optical fiber is also reduced. In general, doubling the bit rate may result in the achievable transmission distance limited by the polarization mode dispersion being reduced by a factor of two. To show the influence of the wavelength dispersion more specifically, when a standard single mode fiber is used, the achievable transmission distance limited by the wavelength dispersion is 60 km if the bit rate is 10 Gbps, and it may be reduced to about 4 km when the bit rate is increased to 40 Gbps. In the case of the next generation systems, i.e., 100 Gbps systems, the achievable transmission distance limited by the wavelength dispersion may be further reduced to 0.6 km, thus making it impossible to achieve a trunk-line optical communication system having a transmission distance of about 500 km. In order to construct a trunk-line optical communication system operating at a super high speed, a special optical fiber having a negative wavelength dispersion, i.e., a so-called dispersion compensation fiber, is now installed in repeaters, transmitters, and receivers so as to offset the wavelength dispersion of the transmission line. However, such a special fiber not only is expensive but also needs a skilled design that can achieve the optimal usage of the dispersion compensation fiber (the optimal length of the dispersion compensation fiber to be used) in each site, and these problems increase the cost of the optical communication system.
In view of the foregoing situation, research on optical communication systems using the OFDM technology is recently attracting increasing attentions as an optical modulation-demodulation method for increasing communication capacity. According to the OFDM technology, multiple sinusoidal waves that are orthogonal to one another in one symbol time, i.e., that have a frequency corresponding to an integer multiple of the reciprocal of one symbol time, are used (these sinusoidal waves are referred to as subcarriers). Specifically, by setting the amplitude and phase of each subcarrier to predetermined values, information is first reflected on the subcarriers (i.e., the subcarriers are modulated by the information). The subcarriers are then multiplexed into a signal, and the signal is used to modulate a carrier for transmission. The OFDM technology has been practically used in VDSL (Very high bit rate Digital Subscriber Line) systems that provide communication between telephone switching stations and households, in power-line communication systems for home use, and in digital terrestrial television systems. It is also expected to be used in the next generation mobile telephone systems.
An optical OFDM communication system is a communication system in which the OFDM technology is applied with light used as the carrier. As described above, the OFDM technology uses multiple subcarriers. In addition, multilevel modulation methods, such as 4-QAM, 8-PSK, or 16-QAM, can be used to modulate the individual subcarriers. For this reason, one symbol time becomes much longer than the reciprocal of the bit rate. As a result, the achievable transmission distance limited by the above described wavelength dispersion and polarization mode dispersion may become sufficiently longer than the transmission distance that needs to be achieved in optical communication system (e.g., 500 km for domestic trunk-line systems), thus enabling the above described dispersion compensation fiber to be eliminated or the amount of usage thereof to be reduced. This provides a possibility of achieving a low cost optical communication system.

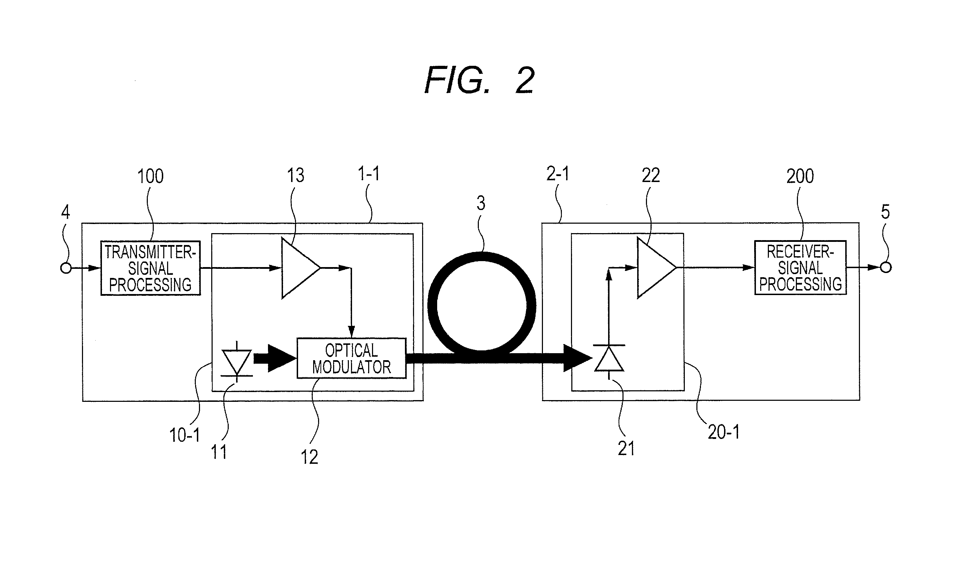

Fig. 2 shows the configuration diagram of an existing optical OFDM communication system using the direct detection method.

An optical transmitter 1-1 and an optical receiver 2-1 are connected through an optical fiber 3. Once data to be transmitted is input into the optical transmitter 1-1 via an input terminal 4, it is converted into a baseband OFDM signal by a transmitter-signal processing unit 100 included in the optical transmitter 1-1. This signal is amplified by a driver amplifier 13, and is then used to field-modulate or intensity-module light, i.e., a carrier, in the optical modulator 12, thus resulting in an optical OFDM signal being generated. The optical OFDM signal travels through the optical fiber 3, i.e., the transmission line, to the optical receiver 2-1. The optical OFDM signal is direct-detection received and converted by a photodiode 21 into an electric signal. The electric signal is ideally the above described baseband OFDM signal, and the electric signal is amplified by a pre-amplifier 22 and is then demodulated by a receiver-signal processing unit 200, resulting in the originally transmitted data being output through an output terminal 5.

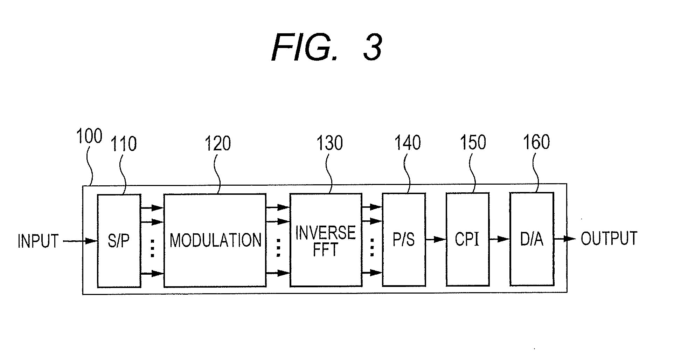

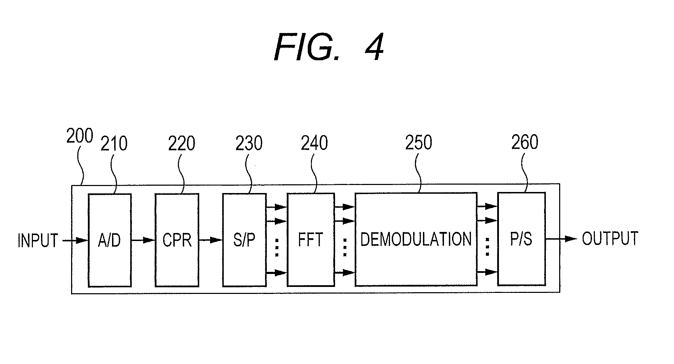

Fig. 3 shows a functional configuration diagram of the transmitter-signal processing unit 100, while Fig. 4 shows a functional configuration diagram of the receiver-signal processing unit 200.

Data to be transmitted is first converted into 2N parallel data components by a serial-parallel converting unit 110. Here, N denotes the number of subcarriers on which the data is reflected. Although when the subcarriers are modulated using 4-QAM, the data is converted into 2N parallel data components, the data is converted into 4N parallel data components when 16-QAM is used, for example. That is, the serial data is converted into "the number of bits in one symbol multiplied by the number of subcarriers" parallel data components. A subcarrier modulating unit 120 modulates the N subcarriers using these parallel data components. The modulated subcarriers are converted into time-series data by an inverse FFT unit 130, and the time-series data is converted into serial data by a parallel-serial converting unit 140. After receiving cyclic prefixes inserted by a cyclic prefix inserting unit 150, the serial data is converted into an analog signal by a D/A converting unit 160, and the analog signal is output to the driver amplifier.

In the receiver-signal processing unit 200, an A/D converting unit 210 converts the received electric signal amplified by the pre-amplifier into a digital signal. A cyclic prefix deleting unit 220 deletes the cyclic prefixes. A serial-parallel converting unit 230 converts the digital signal into N parallel data components. An FFT unit 240 separates these parallel data components into N subcarrier signals. A subcarrier demodulating unit 250 obtains data reflected on the subcarriers by demodulating the subcarrier signals, and the data is then converted into serial data by a parallel-serial converting unit 260.

Optical communication systems and RF radio communication systems share a problem in that the PAPR (Peak-to-Average Power Ratio) of the OFDM signal is high. For RF wireless communication systems, if the linearity of the power amplifier driving the transmission antenna is poor, the signal is distorted at power peaks, thereby reducing the receiving sensitivity or causing interference to the adjacent wireless channels due to spreading of the signal spectrum.

Optical communication systems have another problem due to the high PAPR, which cannot be found in RF wireless communication systems and is therefore unique only to the optical fiber communication. It is a phenomenon, called "nonlinear phase rotation", in which the phase of light rotates more when the peak power is high than when the peak power is not high. This phenomenon is caused due to the fact that optical fibers serving as the transmission line have a weak nonlinearity. The nonlinear optical effect of optical fibers, i.e., so-called Kerr effect, can be represented by the following expression:

$$\phi(t) = \phi_0 + \phi_{NL}(t) = \phi_0 + \frac{\gamma}{\alpha} \cdot P(t) = \phi_0 + \frac{\gamma}{\alpha} \cdot P_{ave} \cdot PAPR(t)$$

where, $\phi_0$ denotes the linear phase, $\phi_{NL}(t)$ denotes the nonlinear phase, $\gamma$ denotes the nonlinear constant of the optical fiber, $\alpha$ denotes the loss factor of the optical fiber, P(t) denotes the optical power, Pave denotes the average optical power, and PAPR(t) denotes the peak-to-average power ratio (PAPR) at time t, respectively. It is to be noted that the symbols shown in italic type in the expression will be presented in non-italic type in the following description for convenience. As can be seen in the expression, the nonlinear phase of light rotates in proportion to the PAPR. For an optical communication system using light having a single wavelength, the peak power of the signal itself may cause the phase to rotate (self-phase modulation effect), causing waveform distortion due to the wavelength dispersion and increasing the error rate. On the other hand, for wavelength multiplexing optical communication systems, the signal peak powers of the adjacent wavelengths may induce phase rotation (cross-phase modulation effect), increasing the bit error rate as in the self-phase modulation effect. These phase rotations may cause the subcarrier phases of the OFDM signal to rotate. Speaking more precisely, a random phase rotation depending on the PAPR is induced in addition to the fixed phase rotation determined by the average power. When the random phase rotation exceeds a threshold value for symbol determination, the symbol is determined to be erroneous. For example, if the subcarriers are modulated using QPSK, a wrong symbol determination may be made when the phase rotates by $\pm\pi/4$ from the ideal symbol point. Therefore, in order to reduce the error rate, it is important to perform optical transmission using a signal having a PAPR that is suppressed as much as possible.

A variety of technologies for PAPR reduction have been proposed for RF wireless transmission systems. Typical examples include, e.g., (1) a filter is used to suppress the spectral interference to the adjacent RF wireless channels while the PAPR is forcibly kept equal to or less than a predetermined value using a hard limiter, (2) data mapping to the subcarriers (i.e., modulation) is tried two or more times to select a modulation having a less PAPR, and (3) a pre-coding (such as the Trellis coding) is used to secure redundancy, thereby generating a signal having a low PAPR. Nonpatent Literature 1 comprehensively describes the principles, advantages, and disadvantages of these approaches. Furthermore, as described in Nonpatent Literature 2, a method in which the envelope of a wireless signal is kept constant (PAPR = 0 dB) using phase modulation is also under study now.

Results of research works in which these PAPR reduction methods are applied to optical OFDM communication systems also have been already published (Nonpatent Literatures 3 and 4). Furthermore, in Japanese Unexamined Patent Application Publication No 2009-188510 (Patent literature 1), there has also been devised an optical OFDM communication system in which the above described phase modulation is used to keep the envelope constant.

Citation List

Patent Literature

Patent Literature 1: Japanese Unexamined Patent Application Publication No.2009-188510

Nonpatent Literature

Nonpatent Literature 1: S. H. Han and J. H. Lee, "An Overview of Peak-to-Average Power Ratio Reduction Techniques for Multicarrier Transmission", IEEE Wireless Communications, April 2005, pp. 56-65
Nonpatent Literature 2: S. C. Thompson, A. U. Ahmed, and J. G. Proakis, et al., "Constant Envelope OFDM", IEEE Transactions on Communications, Vol. 56, No. 8, August 2008, pp. 1300-1312
Nonpatent Literature 3: B. Goebel, S. Hellerbrand, N. Haufe, et al., "PAPR Reduction Techniques for Coherent Optical OFDM Transmission", ICTON2009, Mo. B2. 4, 2009
Nonpatent Literature 4: B. Goebel, S. Hellerbrand, N. Haufe, et al., "Nonlinear Limits for High Bit-Rate O-OFDM Systems", IEEE Summer Topical Meeting2009, MC4. 2, 2009

Summary of Invention

Technical Problem

Using the countermeasures described in Nonpatent Literatures 3 and 4 can merely provide a PAPR equal to or more than 6 dB, which is higher than the PAPR of the existing optical communication systems using OOK, and therefore their advantages are limited. Furthermore, for the technology disclosed in Japanese Unexamined Patent Application Publication No. 2009-188510, the receiving method is limited only to the coherent receiving method, which requires not only a receiver configuration four times larger than that of the direct-detection receiving method but also a complicated receiver-signal processing unit, thus resulting in an expensive communication system being obtained when compared with that using the direct-detection receiving method.

The present invention has been devised in view of the foregoing situations, and an object of the invention is to provide an optical communication system, an optical transmitter, an optical receiver, and an optical transponder that can provide a PAPR lower than the PAPR (6 dB) of the existing optical communication systems where the photoelectric power is high within the transmission line in an optical OFDM communication system and that can be also applied to the direct-detection receiving method. Another object of the present invention is to provide an optical communication system, an optical transmitter, an optical receiver, and an optical transponder that can provide a PAPR less than 6 dB.

Solution to Problem

According to the present invention, the phase of an RF sinusoidal wave is modulated using a baseband OFDM signal, the modulated sinusoidal wave is then used to modulate an optical wave, and the modulated optical wave is transmitted through an optical fiber. Then, the transmitted optical wave is converted into an electric signal, and the electric signal is synchronously detected using the RF sinusoidal wave, thereby recovering the baseband OFDM signal. According to a first aspect of the invention, there is provided an optical communication system including an optical transmitter for modulating a plurality of subcarriers orthogonal to one another over a symbol time by mapping digital data to the subcarriers and transmitting an optical signal through an optical fiber and an optical receiver for converting the optical signal transmitted through the optical fiber into electric subcarrier signals and demodulating the subcarrier signals to recover the original digital data. The optical transmitter includes a transmitter-signal processing unit for modulating a plurality of subcarriers orthogonal to one another over a symbol time by mapping digital data to the subcarriers and generating a baseband OFDM signal by inverse fast Fourier transforming the modulated subcarrier signals, a first oscillator for outputting a sinusoidal wave having a predefined frequency, a phase modulating unit for phase-modulating the sinusoidal wave output from the first oscillator using the baseband OFDM signal, and an electro-optic converting unit for converting the sinusoidal wave output from the phase modulating unit into an optical signal. The optical receiver includes a opto-electric converting unit for converting the optical signal received from the optical transmitter through the optical fiber into an electric signal, a second oscillator for generating a sinusoidal wave having a frequency substantially corresponding to that of the first oscillator, a synchronous detecting unit for synchronously detecting the output of the opto-electric converting unit using the sinusoidal wave output from the second oscillator, and a receiver-signal processing unit for recovering the original digital data from the subcarrier signals obtained by fast Fourier transforming the output of the synchronous detecting unit.

According to a second aspect of the invention, there is provided an optical transmitter included in an optical communication system having an optical transmitter for modulating a plurality of subcarriers orthogonal to one another over a symbol time by mapping digital data to the subcarriers and transmitting an optical signal through an optical fiber and an optical receiver for converting the optical signal transmitted through the optical fiber into an electric subcarrier signals and demodulating the subcarrier signals to recover the original digital data. The optical transmitter includes a transmitter-signal processing unit for modulating a plurality of subcarriers orthogonal to one another over a symbol time by mapping digital data to the subcarriers and generating a baseband OFDM signal by inverse fast Fourier transforming the modulated subcarrier signals, an oscillator for outputting a sinusoidal wave having a predefined frequency, a phase modulating unit for phase-modulating the sinusoidal wave output from the oscillator using the baseband OFDM signal, and an electro-optic converting unit for converting the sinusoidal wave output from the phase modulating unit into an optical signal.

According to a third aspect of the invention, there is provided an optical receiver included in an optical communication system having an optical transmitter for modulating a plurality of subcarriers orthogonal to one another over a symbol time by mapping digital data to the subcarriers and transmitting an optical signal through an optical fiber and an optical receiver for converting the optical signal transmitted through the optical fiber into electric subcarrier signals and demodulating the subcarrier signals to recover the original digital data. The optical receiver includes a opto-electric converting unit for receiving through the optical fiber an optical signal obtained by phase-modulating a sinusoidal wave having a predefined frequency using a baseband OFDM signal and converting the optical signal into an electric signal, an oscillator, for which a frequency substantially corresponding to the above described frequency is set, for generating a sinusoidal wave having the frequency, a synchronous detecting unit for synchronously detecting the output of the opto-electric converting unit using the sinusoidal wave output from the oscillator, and a receiver-signal processing unit for recovering the original digital data from subcarrier signals obtained by fast Fourier transforming the output of the synchronous detecting unit.

According to a fourth aspect of the invention, there is provided an optical transponder including a transmitting section and a receiving section. The transmitting section includes a transmitter-signal processing unit for modulating a plurality of subcarriers orthogonal to one another over a symbol time by mapping digital data to the subcarriers and generating a baseband OFDM signal by inverse fast Fourier transforming the modulated subcarrier signals, a first oscillator for outputting a sinusoidal wave having a predefined frequency, a phase modulating unit for phase-modulating the sinusoidal wave output form the first oscillator using the baseband OFDM signal, and an electro-optic converting unit for converting the sinusoidal wave output from the phase modulating unit into an optical signal. The receiving section includes an opto-electric converting unit for converting the optical signal received through the optical fiber into an electric signal, a second oscillator for generating a sinusoidal wave having a frequency substantially corresponding to that of the first oscillating unit, and a synchronous detecting unit for synchronously detecting the output of the opto-electric converting unit using the sinusoidal wave output from the second oscillator, and a receiver-signal processing unit for recovering the original digital data from subcarrier signals obtained by fast Fourier transforming the output of the synchronous detecting unit.

Advantageous Effects of Invention

The present invention can provide an optical communication system, an optical transmitter, an optical receiver, and an optical transponder that can reduce the PAPR where the photoelectric power is high within the transmission line in an optical OFDM communication system, thus enabling sensitivity degradation to be reduced. Furthermore, the invention can provide an optical communication system, an optical transmitter, an optical receiver, and an optical transponder that can reduce the PAPR, thus enabling long distance transmission.

For example, with an optical communication system having a PAPR of 3 dB according to the invention, the achievable transmission distance determined by the nonlinear phase noise induced by the PAPR is about three times the achievable transmission distance of the existing optical OFDM communication systems.

Brief Description of Drawings

Fig. 1 is a functional block diagram showing an optical communication system according to the invention.
Fig. 2 is a functional block diagram showing an existing optical OFDM communication system.
Fig. 3 is a functional block diagram showing a transmitter-signal processing unit of the OFDM communication system.
Fig. 4 is a functional block diagram showing a receiver-signal processing unit of the OFDM communication system.
Fig. 5 is a functional block diagram showing an optical communication system according to a first embodiment.
Fig. 6 is a functional block diagram showing an optical communication system using direct modulation.
Fig. 7 is a functional block diagram showing an optical communication system using an MZ modulator.
Fig. 8 is a functional block diagram showing an optical communication system using a narrow-band optical filter according to a second embodiment.
Fig. 9 is a schematic diagram showing the spectra of an optical OFDM signal and an electric signal obtained by direct-detection receiving the optical OFDM signal.
Fig. 10 is a functional block diagram showing an optical communication system using an optical IQ modulator according to the second embodiment.
Fig. 11 is a functional block diagram showing another optical communication system using an optical IQ modulator according to the second embodiment, in which a small signal is phase-modulated.
Fig. 12 is a functional block diagram showing still another optical communication system using an optical IQ modulator according to the second embodiment, in which a small signal is phase-modulated.
Fig. 13 is a functional block diagram showing an optical communication system according to a third embodiment.
Fig. 14 is a functional block diagram showing a second receiver-signal processing unit of the OFDM communication system.
Fig. 15 is a configuration diagram showing a synchronous detecting unit.
Fig. 16 is a configuration diagram showing a small signal phase modulating unit.
Fig. 17 is a functional block diagram showing an optical transponder according to a fourth embodiment.
Fig. 18 is a functional block diagram showing a second optical transponder according to the fourth embodiment.

Description of Embodiments

1. Principle and Summary

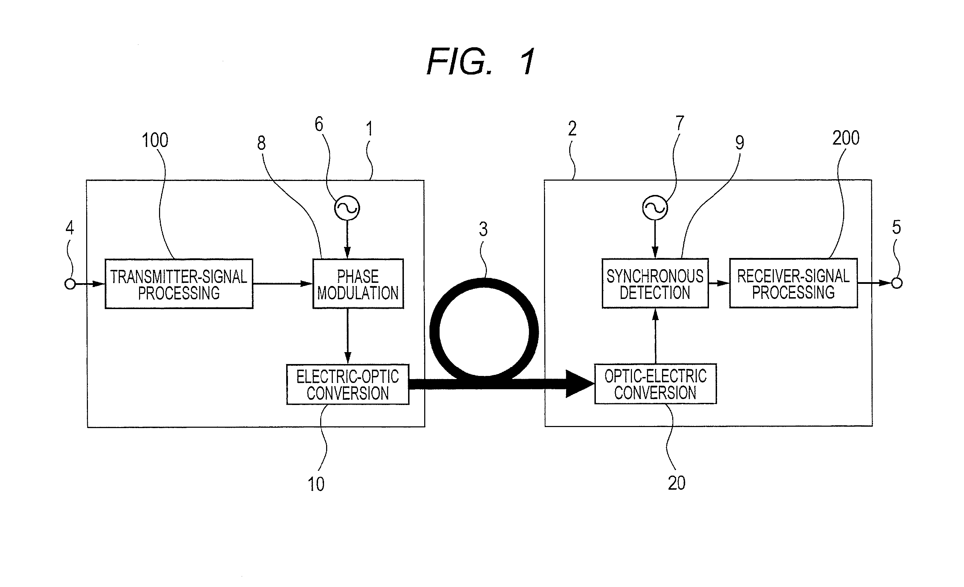

The principle of an embodiment of the present invention will now be described with reference to Fig. 1. In an optical communication system according to the present embodiment, an optical transmitter 1 and an optical receiver 2 are connected through an optical fiber 3. A transmitter-signal processing unit 100 included in the optical transmitter 1 converts data input through an input terminal 4 into a baseband OFDM signal. A phase modulating unit 8 modulates the phase of a sinusoidal wave having a frequency $f_m$ from an RF oscillator (first oscillator) 6 included in the optical transmitter using the baseband OFDM signal. An electro-optic converting unit 10 converts this phase-modulated sinusoidal wave into an optical signal. This electro-optic converting unit 10 converts the sinusoidal wave into a photoelectric power or an electric field. This optical signal travels through the optical fiber 3 serving as the transmission line and enters the optical receiver 2. In the optical receiver 2, an opto-electric converting unit 20 converts the optical signal into an electric signal. The electric signal is synchronously detected using a sinusoidal wave from an RF oscillator (second oscillator) 7 included in the optical receiver 2, and a receiver-signal processing unit 200 recovers the transmitted data from the output signal of the synchronous detecting unit and outputs it through an output terminal 5.

The signals associated with the present embodiment will be described below using mathematical expressions. The output signal of the transmitter-signal processing unit 100 shown in Fig. 1, i.e., the baseband OFDM signal, needs to be a real number so that phase modulation can be performed in an appropriate manner. In order to make it a real number, it is necessary to use the real part or the imaginary part of a complex OFDM signal or to perform the mapping to subcarriers so that the negative frequency component is the Hermitian conjugate of the positive frequency component. To cite an example of using the real part of a complex OFDM signal, for example, the baseband OFDM signal can be represented by the following expression:

$$\phi(t) = \mathrm{Re}\left\{\sum_{k=0}^{N-1} C_k \cdot \exp(j2\pi \cdot \Delta f \cdot k \cdot t)\right\}$$

$$= \sum_{k=0}^{N-1} \mathrm{Re}\{C_k\} \cdot \cos(2\pi \cdot \Delta f \cdot k \cdot t) - \sum_{k=0}^{N-1} \mathrm{Im}\{C_k\} \cdot \sin(2\pi \cdot \Delta f \cdot k \cdot t)$$

$$, \text{for } 0 \le t \le Ts \qquad (1)$$

where $C_k$ denotes the data (the signal space coordinates , e.g., four points consisting of $\pm 1 \pm i$ when the subcarriers are modulated using 4-QPSK). Furthermore, N denotes the number of subcarriers, $\Delta f$ denotes the frequency spacing of the subcarriers, t denotes time, and Ts denotes one symbol time.

When the sinusoidal wave having a frequency $f_m$ output from the RF oscillator 6 is phase-modulated using this signal as the modulation signal, the output signal of the phase modulating unit 8 can be represented by Expression (2) :

$$I(t) = \cos(2\pi \cdot f_m \cdot t + h \cdot \phi(t)) \qquad (2)$$

where h denotes the modulation depth of the phase modulation.

The electro-optic converting unit 10 converts this phase-modulated sinusoidal wave into an optical signal. Assume that a direct modulation semiconductor laser is used as the electro-optic converting device, for example. Then, if the current applied to the semiconductor laser is proportional to Expression (2) and an appropriate bias current is superimposed on the current, the output photoelectric power of the semiconductor laser can be represented by Expression (3):

$$P(t) = P_0 \cdot (1 + \cos(2\pi \cdot f_m \cdot t + h \cdot \phi(t))) \qquad (3)$$

where, $P_0$ denotes the average photoelectric power.

As can be seen in Expression (3), the PAPR is calculated as 3 dB. Therefore, in this case, the PAPR can be reduced significantly when compared with the existing optical OFDM communication.

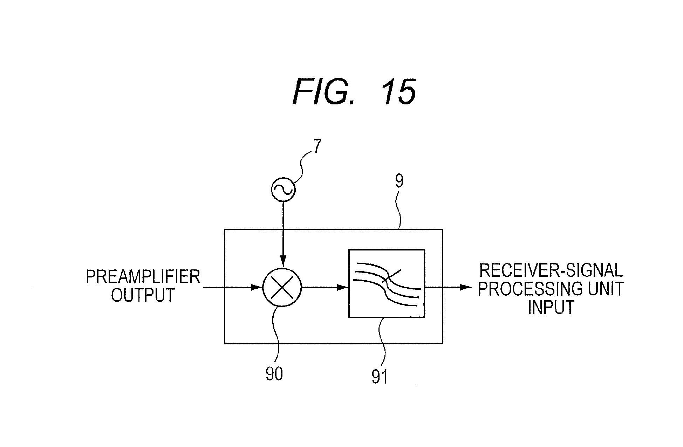

The optical signal denoted by Expression (3) travels through the optical fiber 3 serving as the transmission line and enters the optical receiver 2. In the optical receiver 2, the opto-electric converting unit 20 converts the optical signal into an electric current which is proportional to the photoelectric power of the optical signal (Expression (3)). The current is further converted into a voltage, and is then amplified. The output signal of the opto-electric converting unit 20 thus obtained is synchronously detected by the synchronous detecting unit 9 using the sinusoidal wave output from the RF oscillator 7. The frequency of the sinusoidal wave is equal to (or substantially equal to) the frequency $f_m$ of the RF oscillator 6 included in the transmitter 1. As shown in Fig. 15, an exemplary configuration of the synchronous detecting unit 9 includes a combination of a mixer 90 and a low-pass filter 91, and is configured not to output a frequency component 2 x $f_m$ using the low-pass filter. The operation of the synchronous detecting unit 9 in this case can be represented by Expression (4):

$$\cos(2\pi \cdot f_m \cdot t + h \cdot \phi(t)) \cdot \sin(2\pi \cdot f_m \cdot t) \xrightarrow{\quad LPF \quad} -\frac{1}{2} \cdot \sin(h \cdot \phi(t)) \xrightarrow{\quad small \quad} -\frac{1}{2} \cdot h \cdot \phi(t)$$

$$(4)$$

The first term of the left portion of Expression (4) represents the AC component of the input into the synchronous detecting unit 9, the second term represents the output of the RF oscillator 7, and the left portion as a whole represents the operation of the mixer 90. This signal is output through the low-pass filter 91 of the synchronous detecting unit 9. The signal output from the low-pass filter can be represented by the middle portion of Expression (4). Here, when a small signal is phase-modulated ($h < 1$), the signal can be represented by the right portion of Expression (4). This is proportional to the baseband OFDM signal of Expression (1). By demodulating this signal using the receiver-signal processing unit 200 included in the optical receiver 2, the transmitted data is output from the output terminal 5. This is the basic principle of the present embodiment.

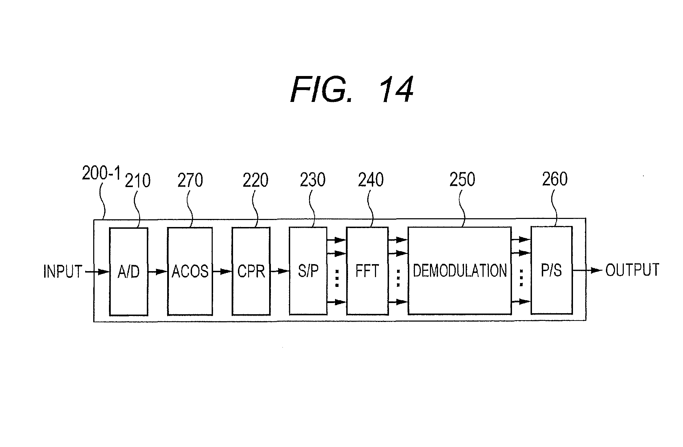

When the small-signal approximation cannot be applied to the phase modulation, the output of the synchronous detecting unit 9 is represented by the middle portion of Expression (4). Then, the transmitted data can be obtained by replacing the receiver-signal processing unit 200 by a receiver-signal processing unit 200-1 shown in Fig. 14. The receiver-signal processing unit 200-1 has a configuration in which a signal processing section 270 for performing arc sine (or arc cosine when the output of the RF oscillator 7 is set as $\cos(2\pi f_m t)$ instead of the above $\sin(2\pi f_m t)$) is inserted into the receiver-signal processing unit 200 after the A/D conversion.

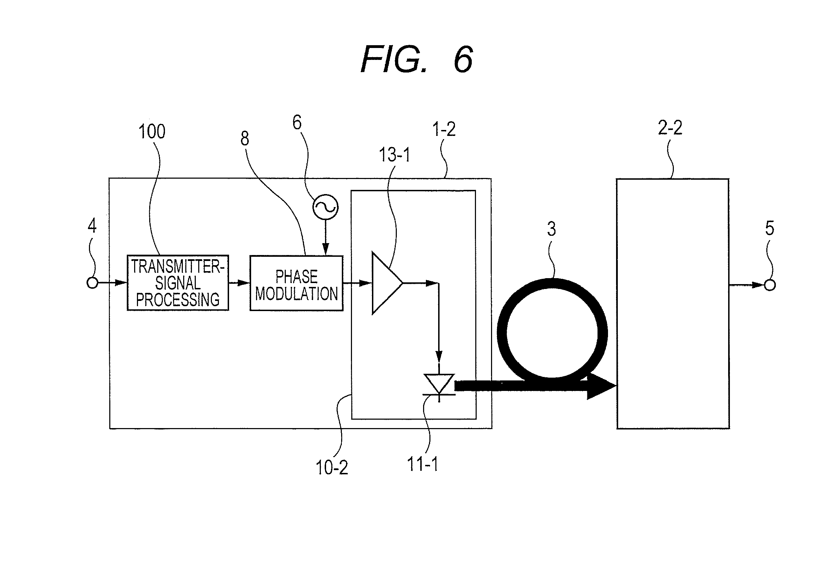

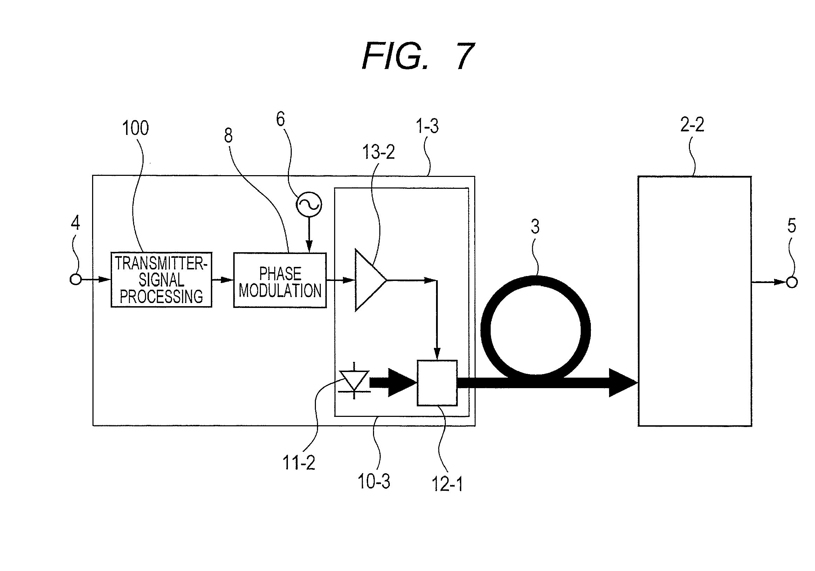

Although the above solution is described as using direct modulation with a semiconductor laser such as that shown in Fig. 6 in the electro-optic converting unit 10, the same operation can also be achieved using field modulation with an MZ modulator. Such an example will be described in detail with reference to Fig. 7 below.

An MZ modulator 12-1 shown in Fig. 7 outputs a photoelectric field in proportion to the input electric signal. This is referred to as field modulation. The electric signal input into the MZ modulator 12-1 is a signal obtained by phase-modulating the sinusoidal wave having the frequency $f_m$ using a real baseband OFDM signal and amplifying the modulated sinusoidal wave using a driver amplifier. In other words, Expression (2) represents the electric signal input into the MZ modulator. Continuous light having a frequency of $f_c$ from a laser 11-2 shown in Fig. 7 is field-modulated by the MZ modulator 12-1, and the light can be represented by the following expression.

$$\cos(2\pi \cdot f_m \cdot t + \phi(t)) \cdot \cos(2\pi \cdot f_c \cdot t) + K_1 \cdot \cos(2\pi \cdot f_c \cdot t) \qquad (5)$$

The first term of Expression (5) represents the field-modulated photoelectric field, while the second term represents the continuous photoelectric field which has not yet been modulated.

In an optical communication system in which field modulation is combined with direct-detection reception, the field-modulated light and the continuous light are transmitted at the same time through the optical fiber. When they are direct-detection received, the field-modulated light and the continuous light generate a beat, which is then converted into an electric signal. In this case, it is necessary to install a band-pass filter or a low-pass filter that blocks a harmonic having a center frequency of $2 \times f_m$, which is two times what is represented in Expression (2), at the output of the opto-electric converting unit included in the receiver.

In order to efficiently extract the electric signal from the beat between the field-modulated light and the continuous light generated during the direct-detection reception, it is preferable that K1 be set as $1+\sqrt{2}/2$ = about 1.7. Then, the PAPR of the light represented by Expression (5) is equal to or less than 6 dB where the photoelectric power is high within the optical fiber 3. This demonstrates that this approach can solve the problems.

The field intensity of the continuous light can be set in a manner shown in Expression (5) by adjusting the direct current bias for the MZ modulator 12-1.

As another example of available solutions, optical SSB (single Side Band) modulation can also be used in the electro-optic converting unit 10. The photoelectric field output from the transmitter using optical SSB modulation can be represented by the following expression.

$$\cos(2\pi \cdot (f_m + f_c) \cdot t + \phi(t)) + K_2 \cdot \cos(2\pi \cdot f_c \cdot t) \qquad (6)$$

The first term of Expression (6) represents the upper sideband wave, while the second term represents the field of the continuous light. Although the following description will be made using the upper sideband wave, the lower sideband wave can also be used in a similar manner.

When the light represented by Expression (6) is direct-detection received, the continuous wave and the upper sideband wave generate a beat, which is obtained as the signal. In order to extract this signal efficiently, it is preferable that the amplitude $K_2$ in the second term of Expression (6) be set as about 1.0.

Then, the PAPR of Expression (6) is calculated as 3 dB. The fact that the PAPR where the photoelectric power is high within the optical fiber is calculated as 3 dB demonstrates that the above described approach using the optical SSB modulation can also solve the problems.

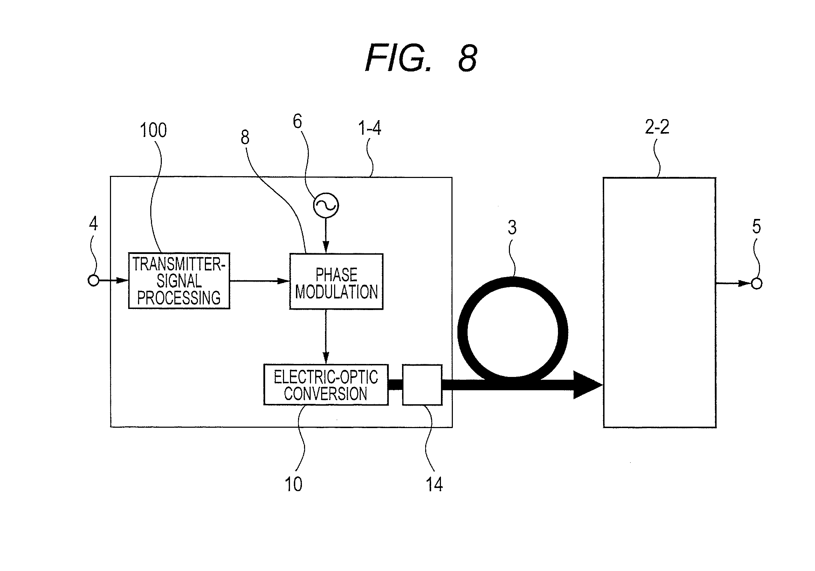

As shown in Fig. 8, the optical SSB modulation can be achieved by filtering the output light using a narrow-band optical filter 14 to block the unnecessary sideband irrespective of whether the direct modulation is performed using a semiconductor laser or using an MZ modulator. Again, in this case, when the direct-detection reception is used in the opto-electric converting unit 20, an appropriate amount of continuous light also needs to be transmitted through the narrow-band optical filter at the same time.

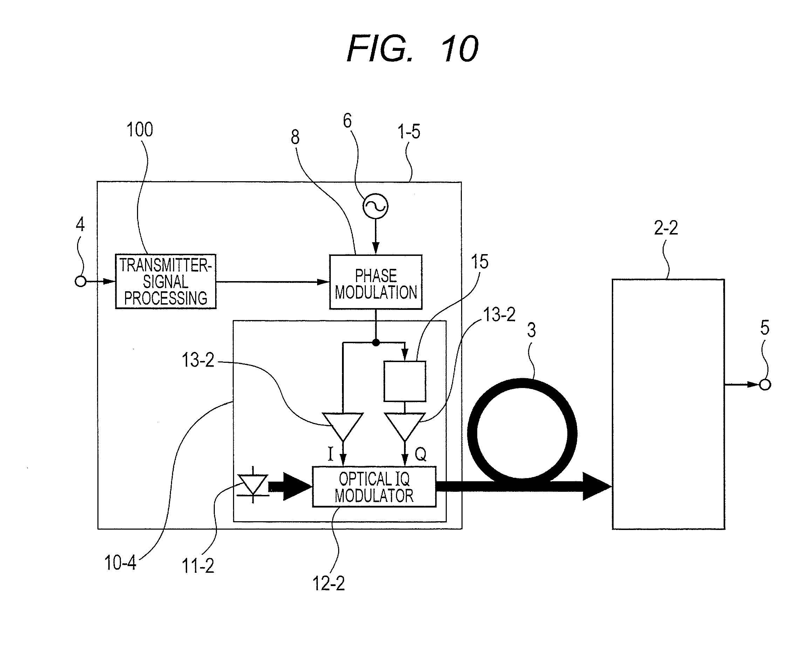

As another approach to achieve the optical SSB modulation, as shown in Fig. 10, it is also possible to use an optical IQ modulator 12-2 as the electro-optic converting unit 10-4 so that a signal obtained by Hilbert transforming the modulation signal for the I component is used as the modulation signal for the Q component. Then, the above described narrow-band optical filter is no more necessary. Again, in this case, when the direct-detection reception is used in the opto-electric converting unit 20, an appropriate amount of the continuous light also needs to be output from the optical IQ modulator at the same time.

The above described solutions use the direct-detection reception. From among these solutions, the solutions using either the MZ modulator or the optical SSB modulation and the direct-detection reception are described as converting the beat generated between the continuous light and the modulated light during the direct detection into an electric signal. However, beats may also be generated among the subcarriers of the OFDM signal, thus resulting in the corresponding electric signals being generated. This phenomenon occurs in a range of $2 \times B$ from direct current on the frequency axis. Here, B denotes the bandwidth of the baseband OFDM signal, and can be represented as B = (N+1) $\times$ $\Delta$f using the symbols in Expression (1). These beat signals among the subcarriers may interfere with the original beat signal between the continuous light and the modulated light, impairing the reception error rate.

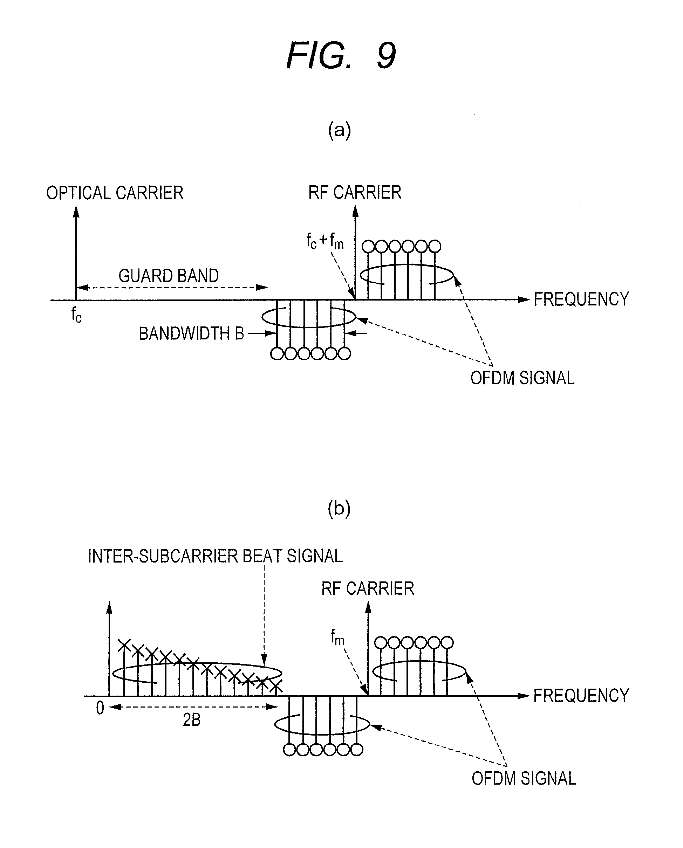

To solve this problem, a guard band may be provided between the frequency $f_c$ of the continuous light and the frequency of the modulated light. This is shown in Fig. 9. Fig. 9(a) shows the spectrum of the optical signal, while Fig. 9(b) shows the spectrum of the electric signal obtained by direct-detection receiving the optical signal. As shown, the beat signals among the subcarriers decreases when observed in the electrical spectrum as the frequency increases. Therefore, it is necessary that a condition $f_m > 2B$ be at least satisfied for avoiding the interference, and a condition $f_m > 3B$ be satisfied for avoiding the interference completely.

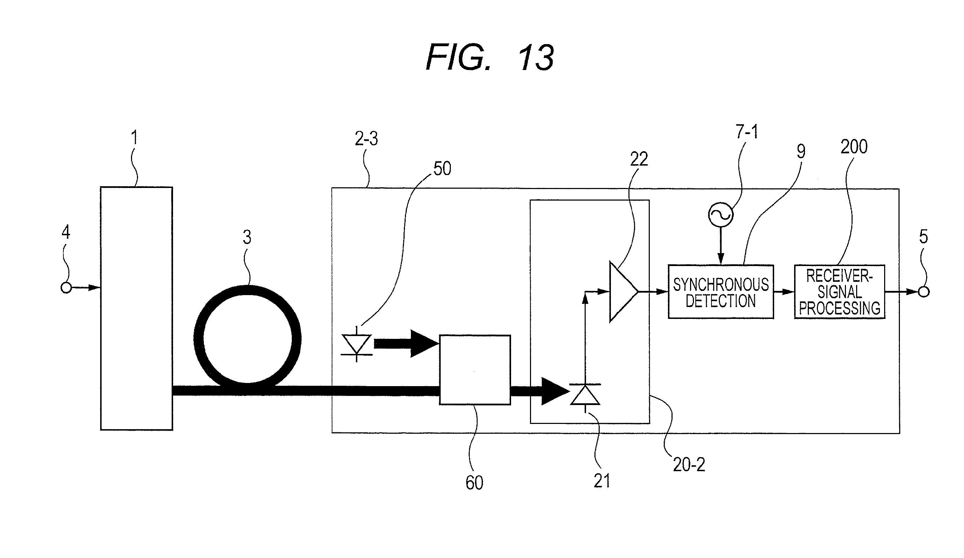

Although the above described solutions are mainly described as using the direct detection reception, the opto-electric converting unit of the receiver in the present embodiment is not limited thereto, and coherent reception can also be used as shown in Fig. 13.

2. First Embodiment

A first embodiment will now be described with reference to Fig. 1, etc. Although it is assumed that the subcarriers are modulated using 4-QAM for exemplary purposes, the present embodiment is not limited thereto, and any subcarrier modulation method can be used. Furthermore, the number of the subcarriers is designated as N (N is an integer) .

Fig. 1 shows the configuration diagram of an optical OFDM communication system. The optical OFDM communication system includes, e.g., a transmitter (optical transmitter) 1, an optical fiber 3, and a receiver (optical receiver) 2. The transmitter 1 includes, e.g., a transmitter-signal processing unit 100, an RF oscillator 6, and an electro-optic converting unit 10. The transmitter 1 may also have an input terminal 4. The receiver 2 includes an opto-electric converting unit 20 and a receiver-signal processing unit 200. The receiver 2 may also have an output terminal 8. The transmitter 1 and the receiver 2 are connected through the optical fiber 3. The electro-optic converting unit 10 of the transmitter 1 may be achieved using a driver amplifier 13-1 and a direct modulation semiconductor laser 11-1 as shown in Fig. 6, for example. Alternatively, it may also include a driver amplifier 13-2, a laser 11-2, and an MZ modulator 12-1 as shown in Fig. 7.

Fig. 3 shows the configuration diagram of the transmitter-signal processing unit 100 in the first embodiment. The transmitter-signal processing unit 100 includes e.g., a serial-parallel converting unit (S/P) 110, a subcarrier modulating unit 120, an inverse FFT unit (inverse fast Fourier transforming unit) 130, a parallel-serial converting unit (P/S) 140, a cyclic prefix inserting unit (CPI) 150, and a digital-analog converting unit (D/A converting unit) 160.

Data to be transmitted is converted into 2N parallel data components by the serial-parallel converting unit 110. The subcarrier converting unit 120 modulates N subcarriers using the parallel data components. The modulated sub-

carriers ($C_k$, K = 1, 2, ..., N) are input into the inverse FFT unit 130. The input signal is converted into time-series data by the inverse FFT unit 130, and the time-series data is converted into serial data by the parallel-serial converting unit 140. After receiving cyclic prefixes inserted by the cyclic prefix inserting unit 150, the serial data is converted by the D/A converting unit 160 into an analog signal to be output. This signal is referred to as a baseband OFDM signal.

A sinusoidal wave output from the RF oscillator 6 shown in Fig. 1 is phase-modulated by the phase modulating unit 8 using the above described baseband OFDM signal, the modulated sinusoidal wave is then converted by the electro-optic converting unit 10 into an optical signal, and the optical signal is output into the optical fiber 3. The phase modulating unit can be achieved by a VCO (Voltage-Controlled Oscillator), for example.

Here, consider the case in which small-signal approximation is possible for the phase modulation. In general, the phase-modulated signal can be represented by the following expression:

$$\cos(\omega_c \cdot t + \phi(t)) = \cos(\omega_c \cdot t) \cdot \cos(\phi(t)) - \sin(\omega_c \cdot t) \cdot \sin(\phi(t)) \qquad (7)$$

where, $\omega_c$ denotes the oscillation angular frequency of the RF oscillator, while $\phi(t)$ denotes the baseband OFDM signal. If the small-signal approximation is performed for the phase modulation, Expression (A) can be represented by the following expression:

$$\cos(\omega_c \cdot t) + \phi(t) \cdot \sin(\omega_c \cdot t) \qquad (8)$$

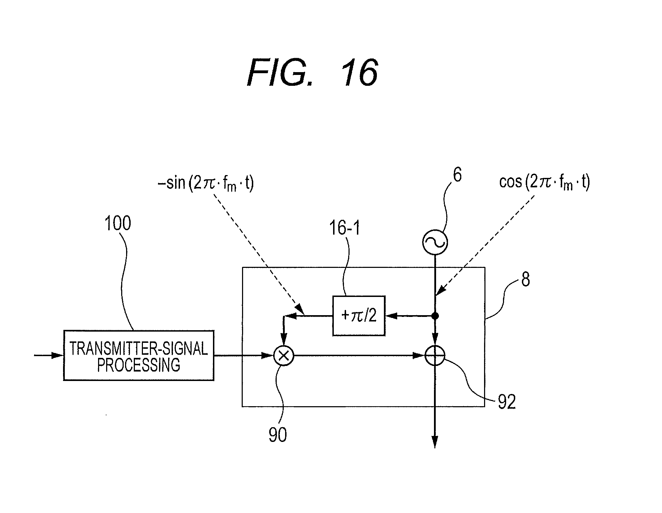

Fig. 16 shows a circuit corresponding to this expression. That is, the phase modulating circuit 8 can be replaced by the circuit shown in Fig. 16 when the small-signal approximation is performed.

As described above, the configuration of the electro-optic converting unit 10 can use the direct modulation (Fig. 6) or the MZ modulation (Fig. 7), for example.

This optical signal enters the receiver 2 through the optical fiber 3 serving as the transmission line. In the receiver, the optical signal is converted by the opto-electric converting unit 20 into an electric signal. This electric signal is synchronously detected by a synchronous detecting unit 9 using a sinusoidal wave output from an RF oscillator 7. The output signal of the synchronous detecting unit 9 is demodulated by the receiver-signal processing unit 200 so that serial data is output through the output terminal 10. The configuration of the receiver-signal processing unit 200 may be the same as, e.g., the configuration shown in Fig. 4, and it can use an ordinary OFDM signal processing configuration.

The configuration of the synchronous detecting unit 9 may be that shown in Fig. 15, for example. More specifically, the electric signal output from the pre-amplifier and the RF signal output from the oscillator 7 having an oscillation frequency corresponding to the oscillation frequency $f_m$ of the RF oscillator 6 of the transmitter are multiplied by a mixer 90, and the output thereof is then filtered by a low-pass filter 91 that allows the low frequency component (equal to or less than the oscillation frequency $f_m$) of the output to pass through, thereby achieving the synchronous detection.

It is also possible to use a receiver-signal processing unit 200-1 shown Fig. 14 as the receiver-signal processing unit. This receiver-signal processing unit 200-1 differs from the receiver-signal processing unit 200 in that a signal processing unit 270 for performing either arc sine or arc cosine is installed after the A/D converting unit 210. This configuration is characterized in that the introduction of the signal processing unit 270 enables more accurate demodulation to be performed when the phase modulation depth is high.

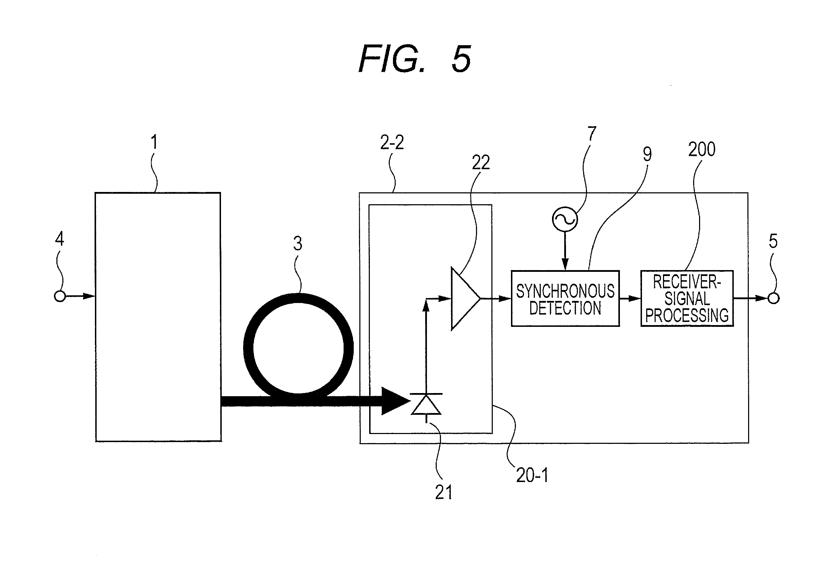

Fig. 5 shows a configuration in which an opto-electric converting unit 20-1 uses direct detection receiving method according to the present embodiment. The opto-electric converting unit 20-1 may include a photodiode 21 and a pre-amplifier 22, for example.

3. Second Embodiment

A second embodiment will now be described with reference to Fig. 8, etc. Fig. 8 shows a system configuration diagram according to the second embodiment. It differs from the first embodiment in that a narrow-band optical filter 14 is installed at the optical output of the electro-optic converting unit 10 in the transmitter 1-4. The narrow-band optical filter blocks a sideband wave of the optical signal output from the electro-optic converting unit 10, thus generating an optical SSB (Single Side Band) signal. Optical SSB signals are known to generate no waveform distortions due to the wavelength dispersion property of optical fibers, and are therefore suitable for long-distance communication systems.

The electro-optic converting unit 10 in the second embodiment may be a unit 10-2 shown in Fig. 6 or a unit 10-3 shown in Fig. 7, while the opto-electric converting unit 20 may be a unit 20-1 shown Fig. 5.

As another means for generating the optical SSB signal, Fig. 10 shows a configuration in which an electro-optic converting unit 10-4 includes a laser 11-2, an optical IQ modulator, a Hilbert transforming unit 15, and a driver amplifier 13-2. This embodiment is characterized in that the wavelength of the semiconductor laser can be selected in an arbitrary manner because the above described narrow-band optical filter is not used.

Furthermore, when small-signal approximation is possible for the phase modulation, the Hilbert transforming unit 15 shown in Fig. 10 can be designed as follows. That is, the output of the phase modulator 8 shown in Fig. 10, i.e., the signal input into the Hilbert transforming unit 15, can be represented by the following expression.

$$\cos(\omega_m \cdot t + \phi(t)) = \cos(\omega_m \cdot t) \cdot \cos(\phi(t)) - \sin(\omega_m \cdot t) \cdot \sin(\phi(t)) \qquad (9)$$

Here, when the small-signal approximation is possible for the phase modulation, Expression (9) can be represented by Expression (10):

$$\cos(\omega_m \cdot t) - \phi(t) \cdot \sin(\omega_m \cdot t) \qquad (10)$$

When Expression (10) is Hilbert transformed taking into account the fact that the baseband OFDM signal $\phi(t)$ is real (it is a real number when phase modulation is performed), it can be approximated by the following expression.

$$\sin(\omega_m \cdot t) + \phi(t) \cdot \cos(\omega_m \cdot t) \cong \sin(\omega_m \cdot t + \phi(t)) \qquad (11)$$

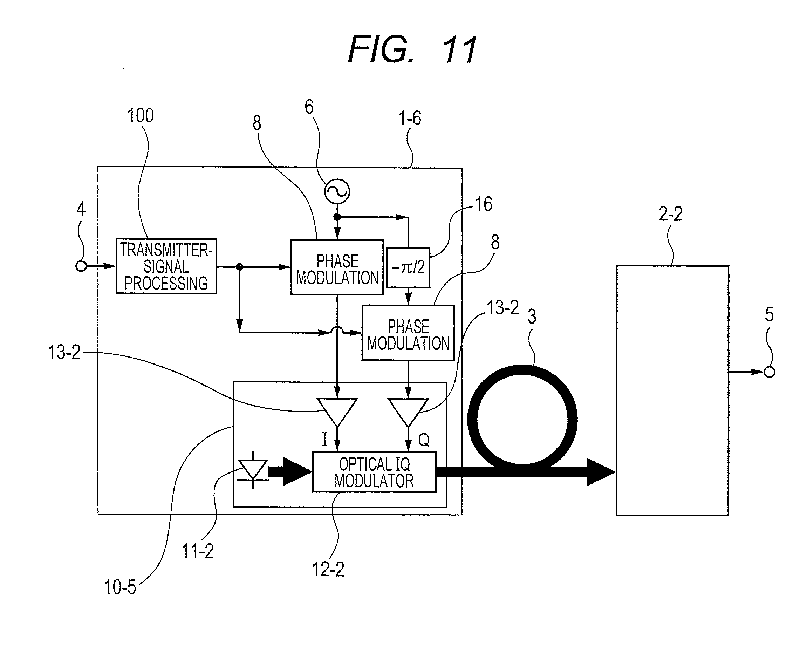

Fig. 11 shows a diagram obtained by applying the right side of Expression (11) to the Hilbert transforming unit 15 shown in Fig. 10. More specifically, shifting the phase of the output $\cos(w_m t)$ from the oscillator 6 by $-\pi/2$ to generate $\sin(w_m t)$ and phase-modulating this sinusoidal wave by the phase modulator 8 using the baseband signal $\phi(t)$ can achieve Hilbert transformation, thus enabling the same optical SSB signal as that shown in Fig. 10 to be generated.

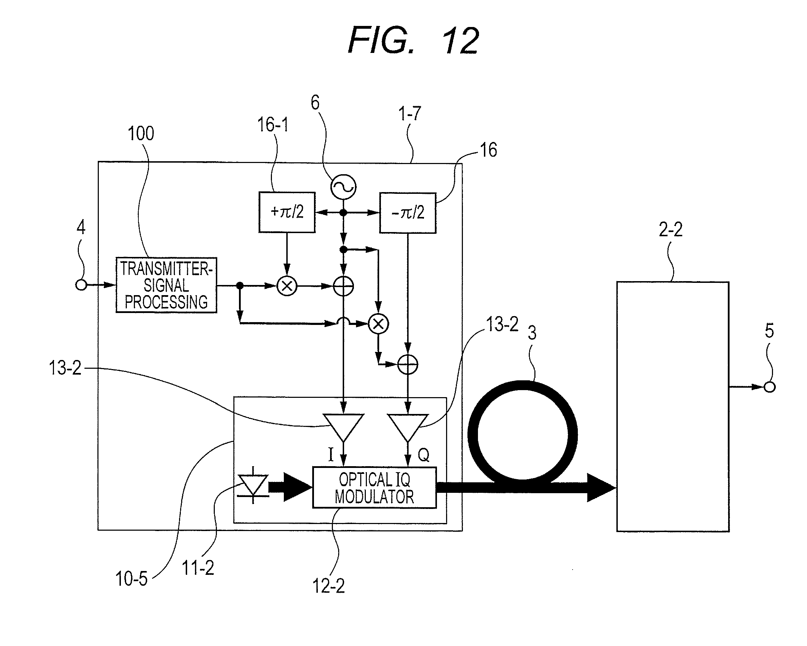

Furthermore, if the phase modulating unit corresponding to the Hilbert transforming unit shown in Fig. 11 is constituted by the left side of Expression (11) and Fig. 16 (Expression 8) is used as the I-side phase modulating unit, Fig. 12 can be used instead of Fig. 10 under the small-signal approximation. That is, Fig. 12 can generate the same SSB signal as Fig. 10.

4. Third Embodiment

A third embodiment will now be described with reference to Fig. 13. Fig. 13 is an overall configuration diagram of a communication system according to the third embodiment.

A receiver 2-3 according to the third embodiment includes e.g., an opto-electric converting unit 20-2, an RF oscillator 7-1, a synchronous detecting unit 9, a receiver-signal processing unit 200, a local oscillator semiconductor laser 50, and an optical combining unit 60. An optical signal transmitted from a transmitter 1 through an optical fiber 3 enters the receiver 2-3. This optical signal is combined with light output from the local oscillator semiconductor laser 50 installed in the receiver 2-3, and is received by the opto-electric converting unit 20-2 using the so-called coherent receiving method so as to be converted into an electric signal. This electric signal is synchronously detected by the synchronous detecting unit 9 using a sinusoidal wave output from the RF oscillator 7-1 included in the receiver 2-3, and the output of the synchronous detecting unit is demodulated by the receiver-signal processing unit 200 so that the transmitted data is output through a terminal 5.

The optical combining unit 60 in the present embodiment may be an optical coupler or an optical 90-degree hybrid, or may be a polarization beam splitter (PBS) capable of polarization diversity and two optical 90-degree hybrids. In addition, as well known, the photodiode 21 may be a balanced photodiode or a pair of photodiodes so as to suit the configuration of the optical combining unit 60.

5. Transponder

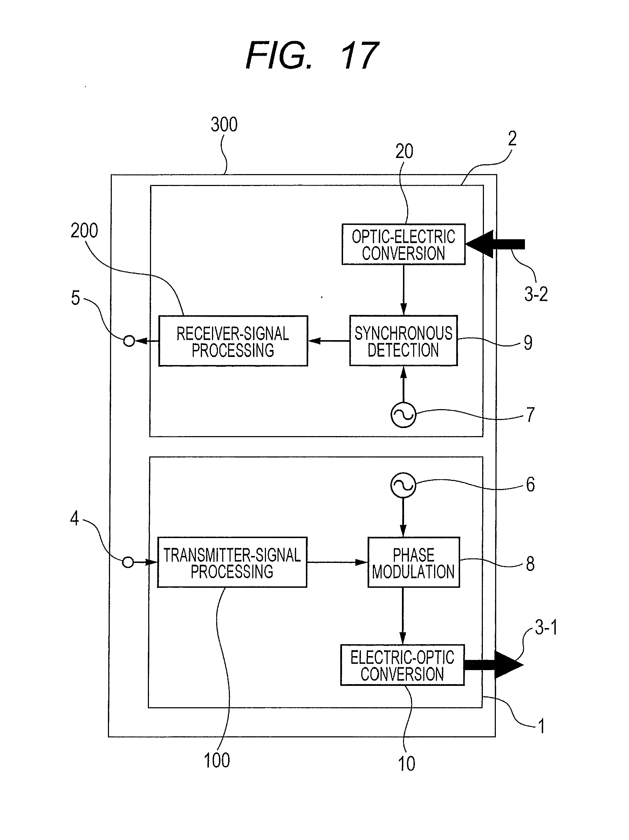

As another embodiment, Fig. 17 shows an optical transponder 300. This optical transponder 300 includes a transmitter 1 and a receiver 2, both of which are accommodated in a housing or mounted on a substrate. Therefore, the optical transponder 300 has two optical fibers 3-1 and 3-2 connected thereto. The optical fiber 3-1 is used to transmit an optical signal, while the optical fiber 3-2 is used to receive an optical signal. Any transmitter or any receiver in the above embodiments can be used as the transmitter 1 or the receiver 2 of the optical transponder 300 as appropriate.

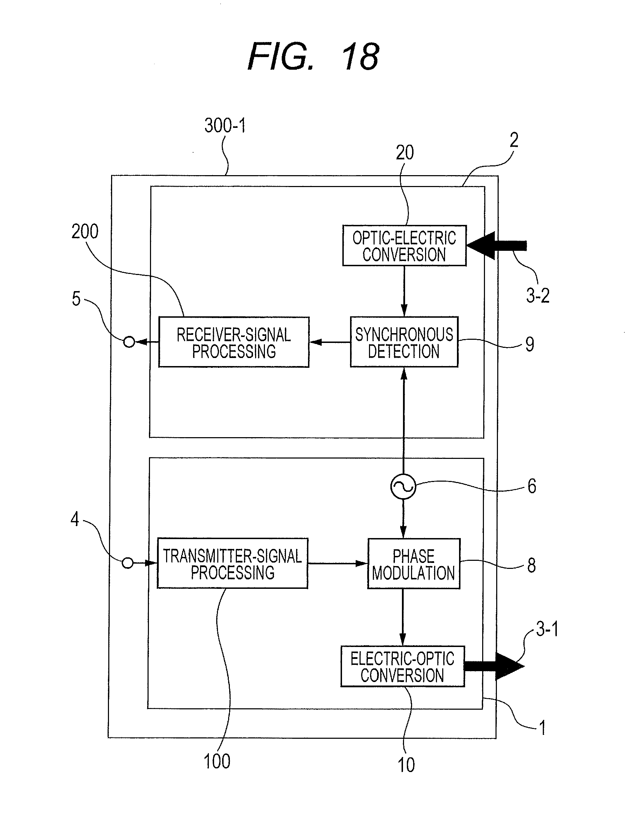

In the present embodiment, a single RF oscillator can serve both as the oscillator included in the transmitter 1 and the oscillator included in the receiver 2. For example, as shown in Fig. 18, the receiver 2 can utilize part of the output from an RF oscillator included in the transmitter 1. Although the RF oscillator included in the transmitter 1 is used in Fig. 18, the RF oscillator may be mounted in any position as long as it is internal to the optical transponder 300-1.

Industrial Applicability

The embodiments described herein can be used for optical communication systems, for example.

List of Reference Signs

| | |
|---|---|
| 1, 1-1, 1-2, 1-3, 1-4, 1-5, 1-6, 1-7 | transmitter (optical transmitter) |
| 2, 2-1, 2-2, 2-3 | receiver (optical receiver) |
| 3, 3-1, 3-2 | optical fiber |
| 4 | input terminal |
| 5 | output terminal |
| 6, 7 | RF oscillator |
| 8 | phase modulating unit |
| 9 | synchronous detecting unit |
| 10, 10-1, 10-2, 10-3, 10-4, 10-5 | electro-optic converting unit 11, 11-2 | laser |
| 11-1 | direct modulation semiconductor laser |
| 12 | optical modulator |
| 12-1 | MZ modulator |
| 12-2 | optical IQ modulator |
| 13, 13-1, 13-2 | driver amplifier |
| 14 | narrow-band optical filter |
| 15 | Hilbert transforming unit |
| 16 | -$\pi$/2 phase shifting circuit |
| 16-1 | +$\pi$/2 phase shifting circuit |
| 20, 20-1, 20-2 | opto-electric converting unit |
| 21 | photodiode |
| 22 | pre-amplifier |
| 30 | optical filter |
| 50 | local oscillation laser |
| 60 | optical combining unit |
| 90 | mixer |
| 91 | low-pass filter |
| 92 | adder |
| 100 | transmitter-signal processing unit |
| 110, 230 | serial-parallel converting unit |
| 120 | subcarrier modulating unit |
| 130 | inverse FFT unit |
| 140, 260 | parallel-serial converting unit |
| 150 | cyclic prefix inserting unit |
| 160 | digital-analog converting unit |
| 200, 200-1 | receiver-signal processing unit |
| 210 | analog-digital converting unit |
| 220 | cyclic prefix deleting unit |
| 240 | FFT unit |
| 250 | subcarrier demodulating unit |
| 270 | arc sine (or arc cosine) unit |

300, 301                    optical transponder

**Claims**

1. A optical communication system, comprising:

   an optical transmitter for modulating a plurality of subcarriers orthogonal to one another over a symbol time by mapping digital data to the subcarriers and transmitting an optical signal through an optical fiber; and
   an optical receiver for performing opto-electric conversion on the optical signal transmitted through the optical fiber and recovering the original digital data by demodulating subcarrier signals, wherein
   the optical transmitter includes:
   a transmitter-signal processing unit for modulating a plurality of subcarriers orthogonal to one another over a symbol time by mapping digital data to the subcarriers and performing inverse FFT calculation on the modulated subcarrier signals to generate a baseband OFDM signal;
   a first oscillator for outputting a sinusoidal wave having a predefined frequency;
   a phase modulating unit for phase-modulating the sinusoidal wave output from the first oscillator using the baseband OFDM signal; and
   an electro-optic converting unit for converting the sinusoidal wave output from the phase modulating unit into an optical signal, and
   the optical receiver includes:

   an opto-electric converting unit for converting the optical signal received from the optical transmitter through the optical fiber into an electric signal;
   a second oscillator for generating a sinusoidal wave having a frequency substantially corresponding to that of the first oscillator;
   a synchronous detecting unit for synchronously detecting an output of the opto-electric converting unit using the sinusoidal wave output from the second oscillator; and
   a receiver-signal processing unit for recovering the original digital data from subcarrier signals obtained by FFT-transforming an output of the synchronous detecting unit.

2. The optical communication system according to claim 1, wherein the opto-electric converting unit performs direct-detection reception using a photodiode.

3. The optical communication system according to claim 1 or 2, wherein the frequency $f_m$ of the sinusoidal waves output from the first and second oscillators satisfies a condition $f_m > 2B$ with respect to a bandwidth B of the baseband OFDM signal.

4. The optical communication system according to any one of claims 1 to 3, wherein the electro-optic converting unit generates an optical SSB (Single Side Band) signal.

5. The optical communication system according to claim 4, wherein as means for generating the optical SSB signal, the electro-optic converting unit includes an optical IQ modulator that uses the output of the phase modulating unit as a modulation signal for an I component and a signal obtained by Hilbert transforming the modulating signal for the I component as a modulation signal for an Q component.

6. The optical communication system according to any one of claims 1, 3, 4, and 5, wherein the opto-electric converting unit includes a local oscillation laser, an optical combining coupler unit, and a photodiode, and performs coherent-detection reception.

7. An optical transmitter in an optical communication system including an optical transmitter for modulating a plurality of subcarriers orthogonal to one another over a symbol time by mapping digital data to the subcarriers and transmitting an optical signal through an optical fiber and an optical receiver for performing opto-electric conversion on the optical signal transmitted through the optical fiber and recovering the original digital data by demodulating subcarrier signals, the optical transmitter comprising:

   a transmitter-signal processing unit for modulating a plurality of subcarriers orthogonal to one another over a symbol time by mapping digital data to the subcarriers and generating a baseband OFDM signal by performing inverse FFT calculation on the modulated subcarrier signals;
an oscillator for outputting a sinusoidal wave having a predefined frequency;
a phase modulating unit for phase-modulating the sinusoidal wave output from the oscillator using the baseband OFDM signal; and
an electro-optic converting unit for converting the sinusoidal wave output from the phase modulating unit into an optical signal.

8.  The optical transmitter according to claim 7, wherein the frequency $f_m$ of the sinusoidal wave output from the oscillator satisfies a relationship $f_m > 2B$ with respect to a bandwidth B of the baseband OFDM signal.

9.  The optical transmitter according to claim 7 or 8, wherein the electro-optic converting unit generates an optical SSB (Single Side Band) signal.

10. The optical transmitter according to claim 9, wherein as means for generating the optical SSB signal, the electro-optic converting unit includes an optical IQ modulator that uses the output of the phase modulating unit as a modulation signal for an I component and uses a signal obtained by Hilbert transforming the modulation signal for the I component as a modulation signal for a Q component.

11. An optical receiver in an optical communication system including an optical transmitter for modulating a plurality of subcarriers orthogonal to one another over a symbol time by mapping digital data to the subcarriers and transmitting an optical signal through an optical fiber and an optical receiver for performing opto-electric conversion on the optical signal transmitted through the optical fiber and recovering the original digital data by demodulating subcarrier signals, the optical receiver comprising:

a opto-electric converting unit for receiving an optical signal obtained by phase-modulating a sinusoidal wave having a predefined frequency using a baseband OFDM signal and converting the optical signal into an electric signal;
an oscillator, for which a frequency substantially corresponding to the predefined frequency is pre-set, for generating a sinusoidal wave having the frequency;
a synchronous detecting unit for synchronously detecting an output of the opto-electric converting unit using the sinusoidal wave output from the oscillator; and
a receiver-signal processing unit for recovering the original digital data from subcarrier signals obtained by FFT transforming an output of the synchronous detecting unit.

12. The optical receiver according to claim 11, wherein the opto-electric converting unit performs direct-detection reception using a photodiode.

13. The optical receiver according to claim 11, wherein the opto-electric converting unit includes a local oscillation laser, an optical combining unit, and a photodiode, and performs coherent-detection reception.

14. An optical transponder, comprising:

an optical transmitting section; and
an optical receiving section, wherein
the optical transmitting section includes:

a transmitter-signal processing unit for modulating a plurality of subcarriers orthogonal to one another over a symbol time by mapping digital data to the subcarriers and generating a baseband OFDM signal by performing inverse FFT calculation on the modulated subcarrier signals;
a first oscillator for outputting a sinusoidal wave having a predefined frequency;
a phase modulating unit for phase-modulating the sinusoidal wave output from the first oscillator using the baseband OFDM signal; and
an electro-optic converting unit for converting the sinusoidal wave output from the phase modulating unit into an optical signal, and
the optical receiving section includes:

a opto-electric converting unit for converting the optical signal received through the optical fiber into an electric signal;

a second oscillator for generating a sinusoidal wave having a frequency substantially corresponding to that of the first oscillator;

a synchronous detecting unit for synchronously detecting an output of the opto-electric converting unit using the sinusoidal wave output from the second oscillator; and

a receiver-signal processing unit for recovering the original data from subcarrier signals obtained by performing FFT transformation on an output of the synchronous detecting unit.

15. The optical transponder according to claim 14, wherein the first oscillator of the transmitting section and the second oscillator of the receiving section share a single oscillator.

*FIG. 1*

EP 2 528 251 A1

# FIG. 2

EP 2 528 251 A1

# FIG. 3

INPUT → | S/P | ⋮ | MODULATION | ⋮ | INVERSE FFT | ⋮ | P/S | → | CPI | → | D/A | → OUTPUT

100  110    120    130    140    150    160

# FIG. 4

INPUT → A/D → CPR → S/P → FFT → DEMODULATION → P/S → OUTPUT

200 210 220 230 240 250 260

EP 2 528 251 A1

# FIG. 5

FIG. 6

EP 2 528 251 A1

EP 2 528 251 A1

## FIG. 7

# FIG. 8

EP 2 528 251 A1

# FIG. 9

## (a)

OPTICAL CARRIER

RF CARRIER

$f_c + f_m$

GUARD BAND

FREQUENCY

$f_c$

BANDWIDTH B

OFDM SIGNAL

## (b)

INTER-SUBCARRIER BEAT SIGNAL

RF CARRIER

$f_m$

0

2B

FREQUENCY

OFDM SIGNAL

24

# FIG. 10

# FIG. 11

EP 2 528 251 A1

FIG. 12

EP 2 528 251 A1

## FIG. 13

# FIG. 14

# FIG. 15

PREAMPLIFIER
OUTPUT

RECEIVER-SIGNAL
PROCESSING UNIT
INPUT

7

9

90

91

# FIG. 16

$-\sin(2\pi \cdot f_m \cdot t)$

6

$\cos(2\pi \cdot f_m \cdot t)$

100

16-1

8

$+\pi/2$

TRANSMITTER-SIGNAL PROCESSING

92

90

# FIG. 17

# FIG. 18

<div align="center">

**INTERNATIONAL SEARCH REPORT**

</div>

| | International application No. |
|---|---|
| | PCT/JP2010/050474 |

**A.   CLASSIFICATION OF SUBJECT MATTER**
*H04B10/02*(2006.01)i, *H04B10/04*(2006.01)i, *H04B10/06*(2006.01)i, *H04B10/14*
(2006.01)i, *H04B10/142*(2006.01)i, *H04B10/152*(2006.01)i, *H04B10/18*
(2006.01)i, *H04B10/26*(2006.01)i, *H04B10/28*(2006.01)i, *H04J14/00*(2006.01)i,
According to International Patent Classification (IPC) or to both national classification and IPC

**B.   FIELDS SEARCHED**

Minimum documentation searched (classification system followed by classification symbols)
H04B10/00-10/28, H04J14/00-14/08

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
IEEE Xplore

**C.   DOCUMENTS CONSIDERED TO BE RELEVANT**

| Category* | Citation of document, with indication, where appropriate, of the relevant passages | Relevant to claim No. |
|---|---|---|
| X<br><br>Y | Xinying Li et al., Study of IQ Imbalance Effect in Direct-Detection Optical OFDM Systems, Asia Communications and Photonics conference and Exhibition 2009, 2009.11.06, pp.1-6 | 1,2,4,7,9, 11,12<br><br>3,5,6,8,10, 13-15 |
| Y | JP 2009-188509 A  (KDDI Corp.),<br>20 August 2009 (20.08.2009),<br>paragraphs [0015] to [0022]; fig. 1, 3<br>(Family: none) | 3,5,6,8,10 13-15 |
| Y | JP 2008-135992 A  (Nippon Telegraph And Telephone Corp.),<br>12 June 2008 (12.06.2008),<br>paragraphs [0057] to [0063]; fig. 7<br>(Family: none) | 6,13-15 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 March, 2010 (25.03.10) | 06 April, 2010 (06.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

<div align="center">

34

</div>

**INTERNATIONAL SEARCH REPORT**

| International application No. |
| --- |
| PCT/JP2010/050474 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 9-219625 A  (Sony Corp.),<br>19 August 1997 (19.08.1997),<br>paragraphs [0002] to [0004]; fig. 4<br>(Family: none) | 14,15 |
| A | JP 5-235894 A  (Fujitsu Ltd.),<br>10 September 1993 (10.09.1993),<br>paragraphs [0011] to [0022]; fig. 1, 3, 4<br>(Family: none) | 1-15 |

Form PCT/ISA/210 (continuation of second sheet) (July 2009)

| INTERNATIONAL SEARCH REPORT | International application No. |
|---|---|
| | PCT/JP2010/050474 |

Continuation of A. CLASSIFICATION OF SUBJECT MATTER
  (International Patent Classification (IPC))

*H04J14/02*(2006.01)i

        (According to International Patent Classification (IPC) or to both national
        classification and IPC)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009188510 A

**Non-patent literature cited in the description**

• **S. H. HAN ; J. H. LEE.** An Overview of Peak-to-Average Power Ratio Reduction Techniques for Multicarrier Transmission. *IEEE Wireless Communications,* May 2004, 56-65
• **S. C. THOMPSON ; A. U. AHMED ; J. G. PROAKIS et al.** Constant Envelope OFDM. *IEEE Transactions on Communications,* August 2008, vol. 56 (8), 1300-1312
• **B. GOEBEL ; S. HELLERBRAND ; N. HAUFE et al.** PAPR Reduction Techniques for Coherent Optical OFDM Transmission. *ICTON2009,* 2009, vol. Mo. B2, 4
• **B. GOEBEL ; S. HELLERBRAND ; N. HAUFE et al.** Nonlinear Limits for High Bit-Rate O-OFDM Systems. *IEEE Summer Topical Meeting2009,* 2009, vol. MC4, 2